(19) Europäisches Patentamt
European Patent Office
Office européen des brevets

(11) Veröffentlichungsnummer: **0 203 290 B1**

(12) **EUROPÄISCHE PATENTSCHRIFT**

(45) Veröffentlichungstag der Patentschrift: **09.10.91**

(51) Int. Cl.⁵: **G06K 7/00,** B65G 47/48, G06K 19/04

(21) Anmeldenummer: **86103547.5**

(22) Anmeldetag: **17.03.86**

(54) **Förderanlage mit Code - Lesesystem.**

(30) Priorität: **30.05.85 DE 3519312**

(43) Veröffentlichungstag der Anmeldung:
**03.12.86 Patentblatt 86/49**

(45) Bekanntmachung des Hinweises auf die
Patenterteilung:
**09.10.91 Patentblatt 91/41**

(84) Benannte Vertragsstaaten:
**AT BE CH FR GB IT LI NL SE**

(56) Entgegenhaltungen:
**DE-A- 3 322 193**
**US-A- 3 908 113**
**US-A- 4 176 260**
**US-A- 4 597 495**

(73) Patentinhaber: **DÜRKOPP ADLER AKTIENGE-SELLSCHAFT**
**Nikolaus-Dürkopp-Strasse 10**
**W-4800 Bielefeld 1(DE)**

(72) Erfinder: **Grube, Erwin**
**Linnenstrasse 120**
**W-4800 Bielefeld 18(DE)**
Erfinder: **Schilling, Gerhard**
**Furtwänglerstrasse 33**
**W-4800 Bielefeld 1(DE)**

Rank Xerox (UK) Business Services

## Beschreibung

Die Erfindung betrifft eine Förderanlage mit Code-Lesesystem, mit mit den einzelnen Fördereinheiten der Förderanlage verbundenen Code-Trägern und wenigstens einer an der Förderbahn der Förderanlage angeordneten Leseeinrichtung.

Der zunehmende Einsatz elektronischer Datenverarbeitungsanlagen in Industriebetrieben führt in steigendem Maße zu einer Automatisierung be-triebsinterner Fördervorgänge. In diesem Zusam-menhang erfolgt die Steuerung von Materialflußsystemen vielfach mit Hilfe von Code-Markierungen an einzelnen Fördereinheiten des Systems sowie Leseeinrichtungen zur Identifizierung der einzelnen Fördereinheiten und zur Verteilung der Fördereinheiten an die gewünschten Zielpositionen. Während die Auswahl geeigneter optischer, magnetischer oder mechanischer Codiermarken zumeist keine Schwierigkeiten bereitet, ist das Ablesen der Codiermarken und das sichere Erkennen der unterschiedlichen Bit-Muster wegen der ständigen Bewegung der Materialflußsysteme und der zwangsläufig verhältnismäßig kurzen, für das Ablesen verfügbaren Zeit problematisch.

Als Code wird vielfach der sogenannte Balken-Code (Bar-Code) verwendet, der mit Hilfe eines Laser-Scanners automatisch gelesen werden kann. Laser-Scanner mit beweglichem Abtaststrahl ermöglichen ein für das sichere Erkennen der Bit-Muster wichtiges, mehrfaches Abtasten der Codiermarken. Obwohl es sich um ein verhältnismäßig sicheres Leseverfahren handelt, zeigt die Erfahrung, daß zumindest bei bewegten Objekten die Fehlerquote relativ groß ist. Zudem ist die Ausrüstung von Förderanlagen mit Laser-Scannern dieser Art wegen der verhältnismäßig hohen Kosten aus Wirtschaftlichkeitsgründen in der Regel nicht möglich.

Ein wesentlich geringerer Kostenaufwand ist erforderlich, wenn Laser mit festem Abtaststrahl verwendet werden, die die jedoch zur sicheren Erkennung der Code-Markierung mehrfach über diese hin- und hergeführt werden müssen. Dies würde allerdings eine schwingende Bewegung der Leseeinrichtung erfordern, die einen hohen konstruktiven Aufwand voraussetzt. Der notwendige gleichförmige Bewegungsablauf innerhalb eines definierten Zeitrasters in stets gleichem Abstand zu dem zu lesenden Code ist praktisch nicht zu realisieren. Auch steuerungstechnisch würden sich Probleme ergeben, da bei oszillierendem Bewegungsablauf eine Interpretation des Codes sowohl in Vorwärts- als auch in Rückwärtsrichtung möglich sein muß. Es bietet sich daher bei Förderanlagen an, nicht die Leseeinrichtung, sondern die einzelnen Fördereinheiten mit der Code-Markierung hin- und herzubewegen. Dies ist jedoch wegen der zu überwindenden Massenträgheitskräfte zumeist ungünstig.

Der Erfindung liegt die Aufgabe zugrunde, eine Förderanlage mit Code-Lesesystem zu schaffen, die in konstruktiv verhältnismäßig einfacher Weise das wiederholte Ablesen einer an einer Fördereinheit angebrachten Codier-Markierung ermöglicht und dadurch ein sicheres Erkennen der Bit-Muster gewährleistet. Diese Aufgabe wird erfindungsgemäß dadurch gelöst, daß die Code-Träger als drehbare Scheiben ausgebildet sind und daß in Verbindung mit der Leseeinrichtung eine Antriebseinrichtung zur Drehung der Scheiben vorgesehen ist.

Anstelle der aus verschiedenen Gründen ungünstigen, hin- und hergehenden Bewegung der Leseeinrichtung oder der Code-Markierung wird die Code-Markierung in Bezug auf die Leseeinrichtung in Drehung versetzt. Die Markierung befindet sich in einer Kreisbahn, die von der Leseeinrichtung abgetastet wird. Die Drehbewegung des Code-Trägers ist konstruktiv in einfacher Weise und auch mit verhältnismäßig genau einzuhaltender Geschwindigkeit zu verwirklichen.

Vorzugsweise dienen bei einem Förderer, dessen Fördereinheiten mit Hilfe von Rollen auf Schienen laufen, die Rollen unmittelbar als Code-Träger.

Der Code kann auf einer Seitenfläche oder auch auf dem Umfang einer Laufrolle angebracht sein. Die Laufrolle läuft von der Schiene des Systems auf eine Antriebswalze und wird in dieser Position durch eine Führungsrolle genau festgelegt.

Weitere Einzelheiten der Erfindung ergeben sich aus den Unteransprüchen.

Im folgenden werden bevorzugte Ausführungsbeispiele der Erfindung anhand der beigefügten Zeichnung näher erläutert.

Fig. 1 ist eine schematische Seitenansicht eines Teilabschnitts einer erfindungsgemäßen Förderanlage;

Fig. 2 zeigt in schematischer Draufsicht den Bahnverlauf einer erfindungsgemäßen Förderanlage;

Fig. 3 ist eine schematische Darstellung einer erfindungsgemäßen Förderanlage in Verbindung mit einer Reihe von Arbeitsplätzen;

Fig. 4 ist eine Teilansicht eines Code-Trägers und einer Leseeinrichtung;

Fig. 5 ist eine Ansicht des Code-Trägers gemäß Figur 4 von rechts in Figur 4;

Fig. 6 zeigt eine andere Ausführungsform eines Code- und Lesesystems.

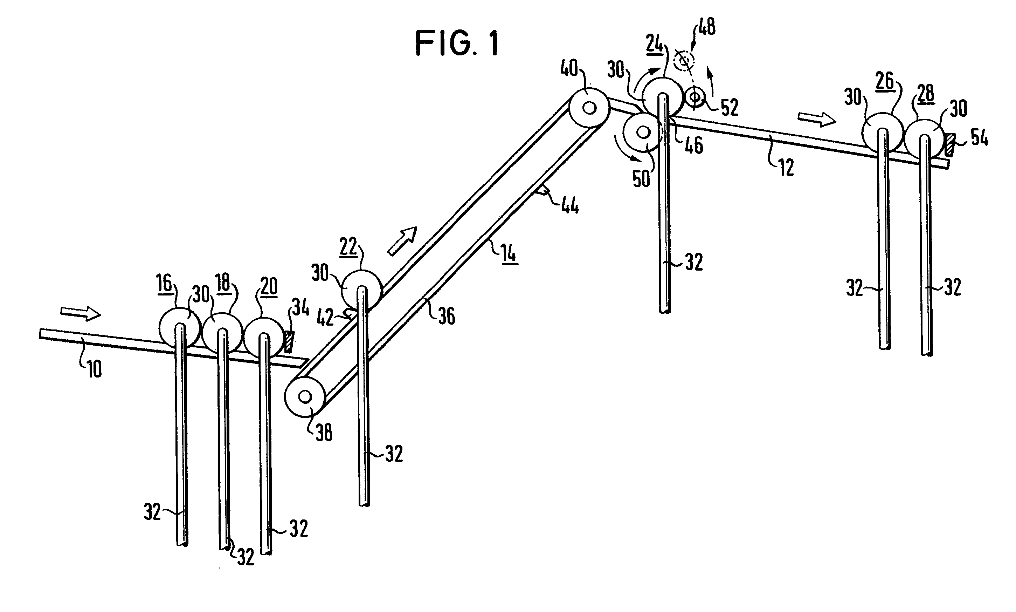

In Figur 1 sind zwei Schienen-Abschnitte 10,12 einer Förderanlage gezeigt, die durch einen zwischengeschalteten Hubförderer 14 verbunden sind, der die Fördereinheiten auf das höhere Niveau des Schienenabschnitts 12 anhebt. Im dargestellten Beispiel handelt es sich um einen Förderer, bei dem die einzelnen Fördereinheiten durch Förderträger 16,18,20,22,24,26,28 gebildet werden, die auf den in Förderrichtung geneigten Schienen-Abschnitten 10,12 mit Hilfe von Laufrollen 30 frei abrollen. Die Laufrollen 30 tragen Bügel 32, die beispielsweise zur Aufnahme von Kleidungsstücken in einem Textilbetrieb dienen. Zum Ausgleich des Höhenverlustes der Förderträger, der sich durch die Neigung der Schienen-Abschnitte 10,12 ergibt, sind geeigneten Positionen Hubförderer 14 zur Rückgewinnung der Höhe erforderlich.

Im dargestellten Beispiel gemäß Figur 1 werden die Förderträger 16,18,20 am Ende des ersten Schienen-Abschnitts 10 durch einen Anschlag 34 festgehalten, durch den die Förderträger vereinzelt freigegeben werden. Nach ihrer Freigabe gelangen die Rollen 30 der Förderträger 16,18,20 in den Bereich des Hubförderers 14, der einen endlosen Förderriemen 36 umfaßt, der um zwei Umlenkrollen 38,40 in einer schräg ansteigenden Bahn umläuft und zwei Nocken 42,44 auf der äußeren Oberfläche in diametral gegenüberliegenden Positionen aufweist, die zum Erfassen der Rollen 30 der Förderträger dienen, wie es in Figur 1 am Beispiel des Förderträgers 22 gezeigt ist.

Der Hubförderer 14 gibt die einzelnen Förderträger auf den zweiten, höher gelegenen Schienen-Abschnitt 12 ab, der in seinem Anfangsbereich eine Unterbrechung 46 aufweist, in der eine erfindungsgemäße Leseeinrichtung 48 vorgesehen ist. In der Unterbrechung oder dem Zwischenraum des Schienen-Abschnitts 12 liegt eine Antriebswalze 50 mit waagerechter, quer zur Förderrichtung verlaufender Drehachse, die durch einen nicht gezeigten Antriebsmotor zeitweilig in Richtung des angegebenen Pfeiles in Drehung zu versetzen ist. Stromabwärts der Unterbrechung des Schienen-Abschnitts 12 befindet sich eine waagerechte, mit ihrer Achse quer zum Schienen-Abschnitt gerichtete Führungsrolle 52, die als Anschlag wirkt und die Laufrolle 30 des in Figur 1 in der Position der Leseeinrichtung gezeigten Förderträgers 24 derart festhält, daß die Laufrolle 30 auf der Antriebswalze 50 liegt und durch diese in Pfeilrichtung gedreht werden kann. Wie später näher erläutert werden soll, befindet sich auf der Laufrolle 30 eine Code-Markierung, die während dieser Drehbewegung abgelesen wird. Nach Beendigung des Lesevorgangs wird die Führungsrolle 52 auf einem nicht gezeigten Schwenkarm in die strichpunktiert dargestellte Position oberhalb der Laufrolle 30 geschwenkt, so daß die Laufrolle freigegeben wird und der Förderträger auf dem Schienenabschnitt 12 nach rechts abrollen kann. Am Ende des zweiten Schienen-Abschnitts 12 ist ein weiterer Anschlag 54 gezeigt, der wiederum eine vereinzelte Weiterleitung der Förderträger ermöglicht.

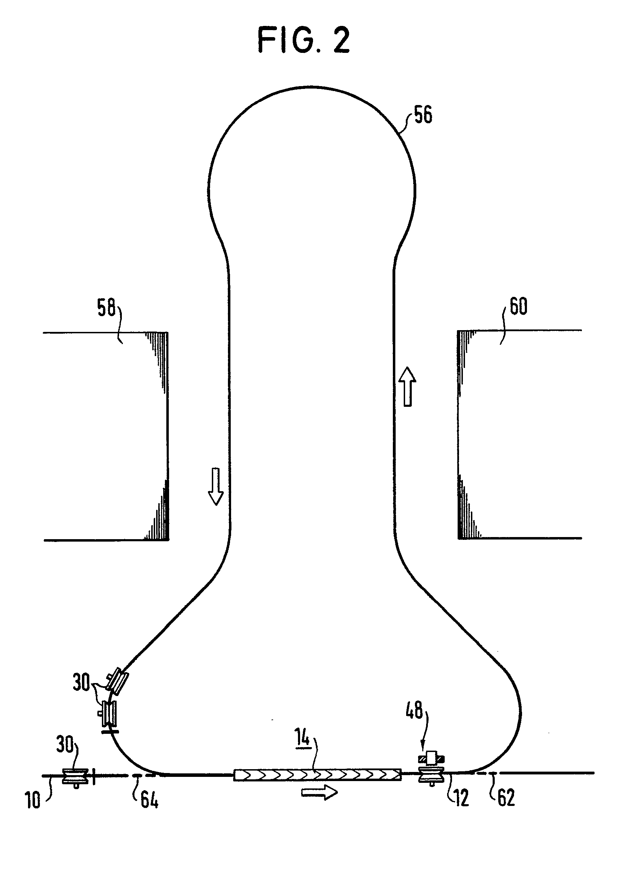

Figur 2 zeigt die zuvor geschilderten Vorgänge in größerem Zusammenhang in einer vereinfachten Draufsicht. Von der durch die Schienen-Abschnitte 10,12 gebildeten Hauptförderstrecke zweigt eine Förderschleife 56 ab, die beispielsweise zur Versorgung von zwei Arbeitsplätzen 58,60 dient. Die einzelnen Förderträger können stromabwärts des Hauptförderers 14 und der Leseeinrichtung 48 mit Hilfe einer Weiche 62 in die Förderschleife 56 eingeleitet und in einer Position vor dem Hubförder 14 über eine Weiche 64 in die Hauptförderstrecke zurückgeleitet werden. Dabei werden die Weichen 62,64 beispielsweise entsprechend dem Leseergebnis der Leseeinrichtung 48 gesteuert. Die Bewegungsrichtungen ergeben sich, ebenso wie bei Figur 1, aus den in der Zeichnung angegebenen Pfeilen.

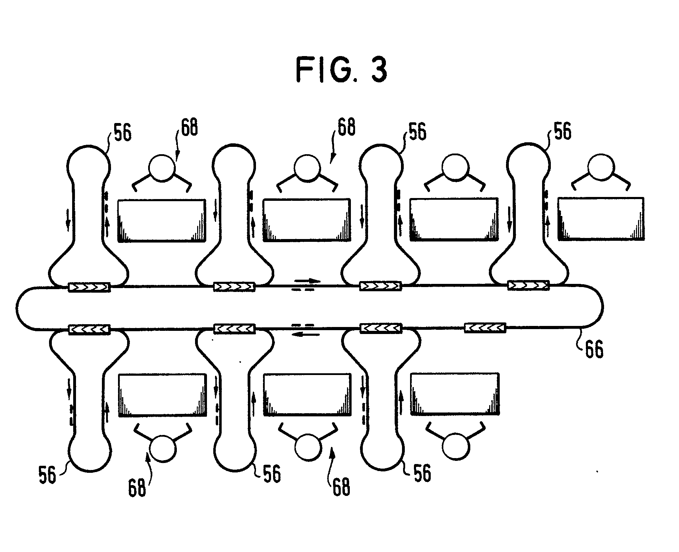

In Figur 3 sind in einer entsprechenden, jedoch weiter verkleinerten Darstellung mehrere Förderschleifen 56 gemäß Figur 2 an eine Hauptförderstrecke 66 angeschlossen. Den Förderschleifen 56 sind jeweils Arbeitsplätze 68 zugeordnet. Vor jedem Arbeitsplatz kann jeweils in der bereits beschriebenen Weise der Code der Förder-Träger abgelesen werden, so daß automatisch jeder Förderträger an den zuständigen Arbeitsplatz gelangt. Zugleich besteht die Möglichkeit, mit Hilfe einer geeigneten Datenverarbeitungsanlage die Position jedes einzelnen Förder-Trägers festzuhalten, Eilaufträgen Vorrang einzuräumen und dergleichen.

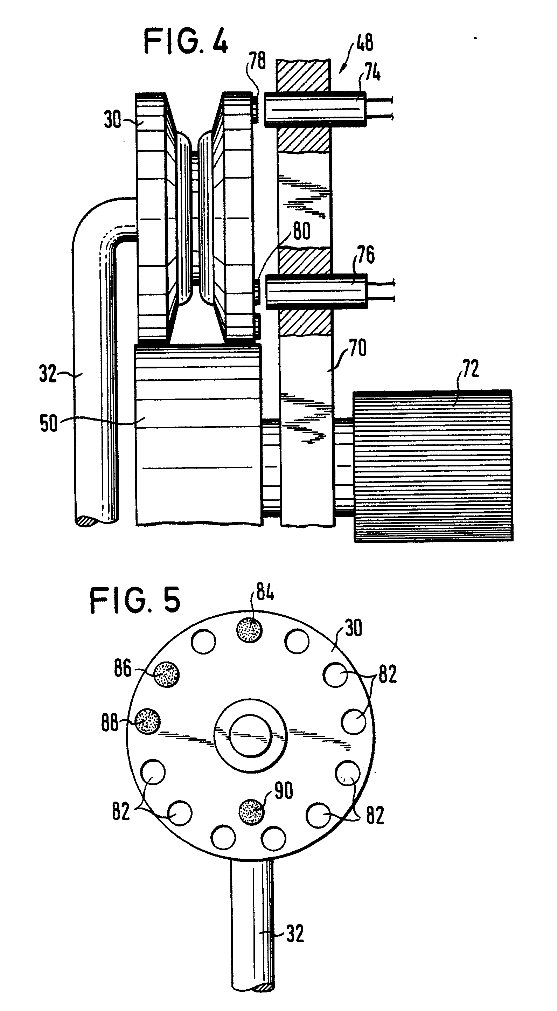

Figur 4 zeigt in gegenüber den vorangegangenen Darstellungen vergrößertem Maßstab eine Laufrolle 30 eines Förderträgers in ihrer Position auf der Antriebswalze 50 der Leseeinrichtung 48. In der Position der Leseeinrichtung 48 befindet sich seitlich der Förderbahn eine senkrechte Trägerplatte 70, in der die Antriebswalze 50 gelagert ist und auf deren Rückseite sich ein Antriebsmotor 72 der Antriebswalze befindet. Ferner sind in nicht bezeichnete Bohrungen der Trägerplatte 70 zwei Detektoren 74,76 eingelassen, die auf optischem, magnetischem oder mechanischem Wege Code-Markierungen 78,80 auf der den Detektoren zugewandten Stirnfläche der Laufrolle 30 abtasten und entsprechende Signale an die zugehörige Datenverarbeitungseinrichtung weiterleiten.

Wie aus Figur 5 hervorgeht, befinden sich in einer konzentrischen Kreisbahn auf der Stirnfläche der Laufrolle 30 Bohrungen 82, in die in ausgewählten Positionen und in ausgewählter Anzahl Codierstifte 84,86,88 eingesetzt sind.

Durch Auswahl der Anzahl der Bohrungen 82 kann eine geeignete Anzahl von Kombinationsmöglichkeiten festgelegt werden. In einer weiter innen liegenden Kreisbahn befindet sich in entsprechender Anordnung ein Codier-Stift 90, der den Beginn der Reihenfolge der abzulesenden Code-Markierungen festlegt und durch den zweiten Detektor 76 erfaßt wird.

Im Falle einer magnetischen Abtastung des zuvor beschriebenen Codes können die Codier-Stifte beispielsweise aus Metall, die Laufrollen dagegen aus Kunststoff bestehen. Anstelle dieses verhältnismäßig einfachen Codes kann auch der bekannte Balken-Code zur Identifizierung verwendet werden.

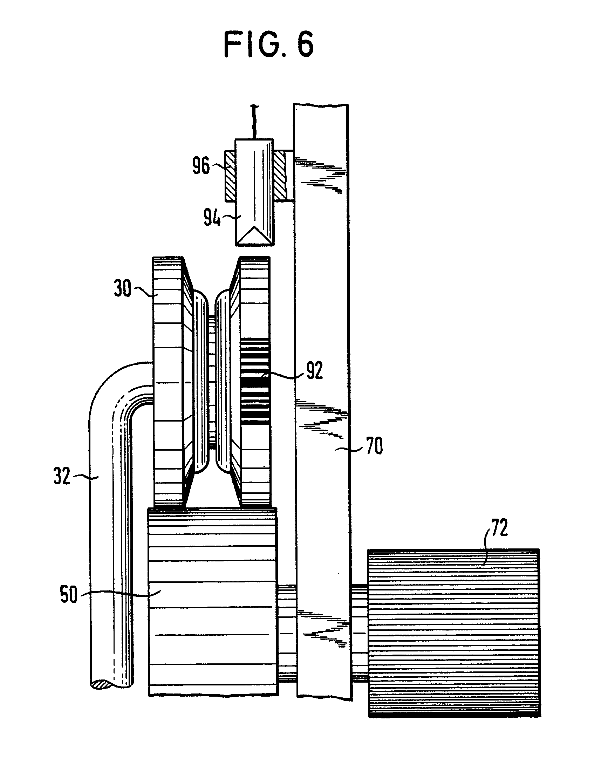

Gemäß Figur 6 ist ein Balken-Code 92 auf dem Umfang der Laufrolle 30 angebracht. Dieser Balken-Code 92 kann beispielsweise durch einen auf den Umfang der Laufrolle 30 gerichteten Laser-Scanner 94 abgetastet werden, der mit Hilfe eines Ansatzes 96 an der Frontseite der Trägerplatte 70 oberhalb der Laufrolle 30 befestigt ist.

Mit Hilfe der Antriebswalze 50 kann der jeweilige Code verhältnismäßig rasch und wiederholt an dem zugehörigen Detektor oder Scanner vorbeibewegt werden. Diese Drehbewegung läßt sich in vorteilhafter Weise mit verhältnismäßig genau bestimmbarer Geschwindigkeit erzeugen, etwa durch Verwendung eines Elektro-Synchronmotors. Sobald der Code zuverlässig abgelesen worden ist, kann die Leseeinrichtung ein Signal zur Freigabe des jeweiligen Förderträgers abgeben.

Die erfindungsgemäße Leseeinrichtung kann insgesamt sehr kompakt ausgeführt werden und erfordert keine komplizierten Antriebsmechanismen für eine Hin- und Herbewegung des Codes oder der Leseeinrichtung. Der gesamte Lesevorgang läuft sehr präzise und mit äußerster Schnelligkeit ab und stellt kein nennenswertes Hindernis innerhalb eines insgesamt kontinuierlichen Fördervorganges dar.

## Patentansprüche

1. Förderanlage mit Code-Lesesystem, mit mit einzelnen Fördereinheiten der Förderanlage verbundenen Code-Trägern (30) und wenigstens einer an der Förderbahn der Förderanlage angeordneten Leseeinrichtung (48), dadurch **gekennzeichnet,** daß die Code-Trägers als drehbare Scheiben (30) ausgebildet sind und daß in Verbindung mit der Leseeinrichtung (48) eine Antriebseinrichtung (50,72) zur Drehung der Scheiben vorgesehen ist.

2. Förderanlage nach Anspruch 1, bei der die Fördereinheiten mit Hilfe von Laufrollen auf Schienen bewegt werden, dadurch **gekennzeichnet,** daß jeweils wenigstens eine Laufrolle (30) der Fördereinheiten (16,18,20,22,24, 26,28) als Code-Träger ausgebildet ist.

3. Förderanlage nach Anspruch 2, dadurch **gekennzeichnet,** daß die Leseeinrichtung (48) eine in einer Unterbrechung der Schienen (10,12) angeordnete Antriebswalze (50) zur Drehung der Laufrollen (30) sowie eine Halteeinrichtung (52) zum zeitweiligen Festhalten eines Förderträgers (16 ... 28) mit auf der Antriebswalze (50) liegender Laufrolle (30) umfaßt.

4. Förderanlage nach Anspruch 2 oder 3, dadurch **gekennzeichnet,** daß Code-Markierungen (78,80, 84,86,88) auf einer Stirnfläche der Laufrollen (30) vorgesehen sind.

5. Förderanlage nach Anspruch 2 oder 3, dadurch **gekennzeichnet,** daß Code-Markierungen (92) auf dem Umfang der Laufrollen (30) vorgesehen sind.

## Claims

1. A conveying Installation with a code reading system, comprising code carriers (30) connected to individual units of the conveying installation and at least one reading device (48) disposed on the conveyor track of the conveying installation, characterised in that the code carriers are rotatable discs (30), and a drive device (50, 72) for rotating the discs is provided in conjunction with the reading device (48).

2. A conveying installation according to claim 1, in which the conveying units move on runners on rails, characterised In that at least one runner (30) of each conveyor unit (16, 10, 20, 22, 24, 26, 28) is constructed as a code carrier.

3. A conveying installation according to claim 2, characterised in that the reading device (48) comprises a drive roller (50) for rotating the runners (30) and is disposed in an interruption in the rails (10, 12), and a holder (52) for temporarily retaining the runner (30) of a conveyor carrier (16... 26) on the drive roller (50).

4. A conveying installation according to claim 2 or 3, characterised in that code markings (78, 00, 84, 88, 88) are provided on one face of each runner (30).

5. A conveying Installation according to claim 2 or 3, characterised in that code markings (92) are provided on the periphery of each runner (30).

## Revendications

1. Installation de transport avec système de lecture de codes, comportant des supports de code (30) reliés avec différentes unités de transport de l'installation et comportant au moins un dispositif de lecture (48) disposé sur la voie de transport de l'installation, caractérisée en ce que les supports de code sont réalisés sous la forme de disques rotatifs (30) et en ce qu'il est prévu, en liaison avec le dispositif de lecture (48), un dispositif d'entraînement (50, 72) pour la rotation des disques.

2. Installation de transport, suivant la revendication 1, pour laquelle les unités de transport se déplacent sur des rails à l'aide de galets de roulement, caractérisée en ce qu'au moins un galet de roulement (30) de chacune des unités de transport (16, 18, 20, 22, 24, 26, 28) est réalisé sous la forme d'un support de code.

3. Installation de transport suivant la revendication 2, caractérisée en ce que le dispositif de lecture (48) comprend un rouleau d'entraînement (50), disposé dans une interruption des rails (10, 12), pour la rotation des galets de roulement (30), ainsi qu'un dispositif d'arrêt (52) pour maintenir temporairement à l'arrêt un support de transport (16, . .28) dont un galet de roulement (30) se trouve sur le rouleau d'entraînement (50).

4. Installation de transport suivant la revendication 2 ou la revendication 3, caractérisée en ce que des marquages de code (78, 80, 84, 86, 88) sont prévus sur une face d'extrémité des galets de roulement (30).

5. Installation de transport suivant la revendication 2 ou la revendication 3, caractérisée en ce que des marquages de code (92) sont prévus sur la périphérie des galets de roulement (30).

FIG. 1

# FIG. 2

# FIG. 3

FIG. 4

FIG. 5

# FIG. 6